# EUROPÄISCHE PATENTSCHRIFT

(11) **EP 3 665 041 B1**
(45) Veröffentlichungstag und Bekanntmachung des Hinweises auf die Patenterteilung: **09.03.2022**
(21) Anmeldenummer: 18734783.6
(22) Anmeldetag: 21.06.2018
(51) Int. Cl.: B60R 7/06, B60R 7/00

(54) **GEHÄUSE FÜR EIN ABLAGEFACH, BEFESTIGUNGSSYSTEM SOWIE VERFAHREN ZUM HERSTELLEN EINES GEHÄUSES FÜR EIN ABLAGEFACH**
HOUSING FOR A STORAGE COMPARTMENT, FIXING SYSTEM, AND METHOD FOR PRODUCING A HOUSING FOR A STORAGE COMPARTMENT
BOÎTIER POUR COMPARTIMENT DE RANGEMENT, SYSTÈME DE FIXATION AINSI QUE PROCÉDÉ POUR FABRIQUER UN BOÎTIER POUR UN COMPARTIMENT DE RANGEMENT

(30) Priorität: 09.08.2017 DE 102017213857
(43) Veröffentlichungstag der Anmeldung: 17.06.2020
(73) Patentinhaber: Volkswagen Aktiengesellschaft, 38440 Wolfsburg (DE)
(72) Erfinder: GNIELKA, Eckart, 38442 Wolfsburg (DE)
(86) Internationale Anmeldenummer: PCT/EP2018/066541
(87) Internationale Veröffentlichungsnummer: WO 2019/029885

(56) Entgegenhaltungen:
- DE-A1-102009 042 053
- DE-U1-202017 105 704
- US-A- 5 520 313
- US-A1- 2005 133 523
- US-A1- 2008 093 401

## Beschreibung

Die Erfindung betrifft ein Gehäuse für ein Ablagefach eines Fahrzeugs gemäß dem Oberbegriff des Anspruchs 1, ein Befestigungssystem zur zumindest teilweisen Befestigung einer Klappe eines Ablagefachs eines Fahrzeugs gemäß dem Oberbegriff des Anspruchs 4 sowie ein Verfahren zum Herstellen eines Gehäuses für ein Ablagefach eines Fahrzeugs.

Es ist bekannt, dass Ablagefächer in Fahrzeugen häufig mit einer Klappe versehen werden, welche zum Öffnen und Schließen des Ablagefachs dient. So sind z.B. Handschuhfächer von Fahrzeugen meist oberhalb eines Freiraums für die Beine eines Beifahrers angeordnet. Die Klappe zum Öffnen und Schließen des Handschuhfachs ist dabei schwenkbeweglich an einem Gehäuse gelagert, damit auch der Beifahrer komfortabel in das Handschuhfach eingreifen kann. Um die Schwenkbewegung zu beeinflussen ist ferner häufig eine Führung vorgesehen, welche die Klappe des Handschuhfachs bei der Öffnungs- und Schließbewegung führt. Eine derartige Führung ist beispielsweise aus der gattungsgemäßen

DE 10 2009 042 053 A1 bekannt. Derartige Führungen sind dabei oft zum einen an der Klappe und zum anderen an einem Gehäuse des Handschuhfachs befestigt, wozu das Gehäuse eine Bohrung oder dergleichen aufweist. Da derartige Gehäuse häufig als Spritzgussteil ausgeführt sind, welche in Richtung des Ablagefachs entformt werden, muss häufig die Befestigungsöffnung nachträglich in das Gehäuse eingebracht werden. Dies erfordert jedoch einen weiteren Bearbeitungsschritt, welcher nach dem Spritzgießen durchgeführt werden muss und beispielsweise ein Bohren und/oder Fräsen umfassen kann. Alternativ ist es bekannt, einen Schieber vorzusehen, welcher die Befestigungsöffnung während des Spritzgussvorgangs in das Gehäuse einbringt. Der Schieber hat jedoch werkzeugtechnische Nachteile, wie beispielsweise einen erhöhten Bauraum im Formwerkzeug, und er erhöht die Kosten des Spritzgusswerkzeugs für das Gehäuse.

Es ist daher eine Aufgabe der vorliegenden Erfindung, voranstehende aus dem Stand der Technik bekannte Nachteile zumindest teilweise zu beheben. Insbesondere ist es eine Aufgabe der vorliegenden Erfindung, ein Gehäuse für ein Ablagefach hinsichtlich der Herstellung und/oder der Führungseigenschaften für die Klappe des Ablagefachs zu verbessern.

Die voranstehende Aufgabe wird gelöst durch ein Gehäuse für ein Ablagefach eines Fahrzeugs mit den Merkmalen des Anspruchs 1, ein Befestigungssystem mit den Merkmalen des Anspruchs 4 und ein Verfahren zum Herstellen eines Gehäuses mit den Merkmalen des Anspruchs 10.

Weitere Merkmale und Details der Erfindung ergeben sich aus den Unteransprüchen, der Beschreibung und den Zeichnungen. Dabei gelten Merkmale und Details, die im Zusammenhang mit dem erfindungsgemäßen Gehäuse beschrieben sind, selbstverständlich auch im Zusammenhang mit dem erfindungsgemäßen Befestigungssystem und/oder dem erfindungsgemäßen Verfahren und jeweils umgekehrt, so dass bezüglich der Offenbarung zu den einzelnen Erfindungsaspekten stets wechselseitig Bezug genommen wird bzw. werden kann.

Erfindungsgemäß weist das Gehäuse für ein Ablagefach eines Fahrzeuges eine Wandung mit einem ersten Flächenbereich auf. Der erste Flächenbereich bildet eine erste Seite der Wandung zumindest teilweise aus. Ferner weist die Wandung eine Befestigungsöffnung auf, die an den ersten Flächenbereich angrenzt. Dabei ist in der Befestigungsöffnung ein Führungsmittel zum Führen einer Öffnungs- und/oder Schließbewegung einer Klappe des Ablagefachs anordbar. Weiterhin weist die Befestigungsöffnung eine Mantelfläche auf, welche zumindest teilweise über den ersten Flächenbereich, insbesondere zur ersten Seite, hinausragt.

Vorzugsweise handelt es sich bei dem Ablagefach um ein Handschuhfach eines Fahrzeugs. Bei dem Gehäuse kann es sich vorzugsweise um einen Teil einer Instrumententafel eines Fahrzeugs handeln. Dadurch, dass die Mantelfläche zumindest teilweise über den ersten Flächenbereich hinausragt, ist ein Versatzbereich an der Öffnung geschaffen, in welchem vorzugsweise zwei Formelemente eines Formwerkzeugs einander kontaktieren können, so dass beim Gießen des Gehäuses die Befestigungsöffnung entsteht. Vorzugsweise kann der erste Flächenbereich die erste Seite teilweise, insbesondere einen Teil der Oberfläche der ersten Seite, ausbilden. Dabei bildet ein weiterer Flächenbereich einen weiteren Teil der ersten Seite aus. Der erste und der weitere Flächenbereich sind durch eine Stufe getrennt oder gehen stufenlos durch eine Schräge ineinander über. Insbesondere ragt die Mantelfläche somit derart über den ersten Flächenbereich hinaus, dass eine Entformung bei der Herstellung des Gehäuses möglich ist, bei welchem die Befestigungsöffnung entsteht. Dass die Mantelfläche zumindest teilweise gegenüber dem ersten Flächenbereich hinausragt kann somit derart verstanden werden, dass die Mantelfläche zur ersten Seite zumindest teilweise erhöht ist. Unter der Mantelfläche kann die Innenfläche der Befestigungsöffnung verstanden werden, d.h. insbesondere die Fläche, an welcher das Führungsmittel anliegt, wenn dieses in der Befestigungsöffnung montiert ist. Die Mantelfläche kann vorteilhafterweise durch einen Bereich der Wandung, insbesondere durch eine Stirnfläche der Wandung, gebildet sein. Vorzugsweise ist die Mantelfläche somit zumindest bereichsweise senkrecht zu einem Radius des Durchgangs der Befestigungsöffnung orientiert. Insbesondere bildet die Mantelfläche einen Rand der Befestigungsöffnung aus. Dabei ist insbesondere eine erste Randseite relativ zu einer zweiten Randseite erhaben. Weiterhin ist es denkbar, dass der Rand der Befestigungsöffnung gestuft ausgeführt ist, wobei die erste Randseite, welche gegenüber dem ersten Flächenbereich erhöht ist, vorzugsweise der zweiten Randseite gegenüberliegt. Vorzugsweise kann die Mantelfläche senkrecht oder im Wesentlichen senkrecht zum ersten Flächenbereich sein. Ferner kann eine Wandstärke der Wandung am Rand der Befestigungsöffnung konstant oder im Wesentlichen konstant sein. Vorzugsweise kann das Gehäuse, insbesondere die Wandung, einen Kunststoff aufweisen oder aus einem Kunststoff bestehen. Insbesondere ist die Wandung als Kunststoff-Spritzgussteil ausgeführt. Vorzugsweise kann es sich bei der ersten Seite der Wandung um eine Außenseite der Wandung handeln. Unter der Außenseite kann insbesondere eine Seite der Wandung verstanden werden, welche vom Ablagefach abgewandt ist. Der erste Flächenbereich kann somit einen Teil der Oberfläche der ersten Seite bilden. Insbesondere grenzt der erste Flächenbereich an der ersten Randseite an die Befestigungsöffnung, während die zweite Randseite der Befestigungsöffnung über den ersten Flächenbereich hinausragt. Dadurch kann eine Entformung entlang des ersten Flächenbereichs während der Herstellung des Gehäuses durchgeführt werden.

Somit kann die Befestigungsöffnung beim Gießen des Gehäuses bzw. beim Entformen des Gehäuses hergestellt werden, ohne dass ein zusätzlicher Schieber zur Herstellung der Befestigungsöffnung notwendig ist. Gleichzeitig kann durch die Befestigungsöffnung eine Führung der Klappe gewährleistet werden, indem das Führungsmittel in der Befestigungsöffnung montierbar ist. Dadurch können die Herstellkosten reduziert werden und der Herstellvorgang vereinfacht werden.

Vorzugsweise kann bei einem erfindungsgemäßen Gehäuse vorgesehen sein, dass ein zweiter Flächenbereich einer zweiten Seite der Wandung an die Befestigungsöffnung angrenzt, wobei der zweite Flächenbereich mit dem ersten Flächenbereich zumindest im Wesentlichen in einer Ebene liegt oder gegenüber dem ersten Flächenbereich in Richtung der ersten Seite erhaben ist. Insbesondere kann die Mantelfläche gleichzeitig über den zweiten Flächenbereich hinausragen, wodurch insbesondere der Versatz gebildet ist. Die zweite Seite der Wandung kann vorzugsweise der ersten Seite gegenüberliegen und somit dem Ablagefach zugewandt sein. Insbesondere handelt es sich bei der zweiten Seite somit um eine Innenseite der Wandung. Der zweite Flächenbereich grenzt somit vorzugsweise an der zweiten Randseite der Befestigungsöffnung an die Befestigungsöffnung an. Dass der zweite Flächenbereich mit dem ersten Flächenbereich zumindest im Wesentlichen in einer Ebene liegt, kann derart verstanden werden, dass sich die gegenüberliegenden Randseiten der Befestigungsöffnung auch derart überlappen können, dass eine Zwangsentformung möglich ist. Somit kann beim Entformen auch ein Formelement zumindest teilweise in die Befestigungsöffnung hineinragen und beim Entformen herausgezogen werden. Vorzugsweise kann der zweite Flächenbereich jedoch auch mit dem ersten Flächenbereich vollständig in einer Ebene liegen. Insbesondere können der erste und zweite Flächenbereich lediglich in einem Randbereich der Befestigungsöffnung in einer Ebene liegen, insbesondere wenn die Flächenbereiche schräg zueinander ausgebildet sind. Dadurch ist eine Zwangsentformung nicht notwendig und gleichzeitig kann der Versatz der Randseiten der Befestigungsöffnung minimal ausgestaltet sein. Damit können beispielsweise Werkzeugkosten des Formwerkzeugs reduziert sein. Ferner kann der zweite Flächenbereich gegenüber dem ersten Flächenbereich in Richtung der ersten Seite erhaben sein, so dass eine Entformung des Bauteils weiter vereinfacht sein kann. Somit können der erste und zweite Flächenbereich jeweils beispielsweise als Entformungsschräge vorgesehen sein, um eine Entformung des Gehäuses weiter zu vereinfachen. Insbesondere kann sich dadurch ein Versatz ergeben, bei welchem die zweite, erhöhte Randseite der Befestigungsöffnung vollständig gegenüber der ersten Randseite versetzt ist.

Bei einem erfindungsgemäßen Gehäuse ist es ferner denkbar, dass die Mantelfläche zur rotatorischen Führung des Führungsmittels zumindest teilweise zylinderartig ausgebildet ist. Vorzugsweise kann dabei die Befestigungsöffnung einen Montageausschnitt aufweisen, durch welchen zumindest ein erster Vorsprung eines Rotationselementes des Führungsmittels, insbesondere zur Montage des Führungsmittels, hindurchsteckbar ist. Vorzugsweise sind zumindest die erste und die zweite Randseite zylinderartig ausgebildet. Dadurch kann zum einen eine sichere Führung eines Rotationselementes des Führungsmittels in der Befestigungsöffnung gegeben sein. Zum anderen kann dadurch ein Formwerkzeug einfach ausgestaltet sein, da eine derartige Rundung beispielsweise in einfacher Art und Weise als Negativform gefräst sein kann. Der Montageausschnitt kann somit eine Unterbrechung der zylinderartigen Form darstellen, und sich z. B. rechteckförmig von der Mitte der Befestigungsöffnung in die Wandung erstrecken. Der erste Vorsprung kann vorzugsweise an einem Rotationselement des Führungsmittels angeordnet sein, welches von der zweiten Seite zur ersten Seite durch die Befestigungsöffnung hindurchgesteckt werden kann. Somit kann durch den ersten Vorsprung ein Teil eines bajonettartigen Verschlusses gebildet sein.

Gemäß einem weiteren Aspekt der Erfindung ist ein Befestigungssystem zur zumindest teilweisen Befestigung einer Klappe eines Ablagefachs eines Fahrzeugs beansprucht. Das Befestigungssystem weist dabei ein Führungsmittel zum Führen einer Öffnungs- und/oder Schließbewegung der Klappe auf. Ferner weist das Befestigungssystem ein Gehäuse mit einer Wandung auf, welche eine Befestigungsöffnung aufweist. In der Befestigungsöffnung ist dabei das Führungsmittel angeordnet. Weiterhin ist das Gehäuse gemäß einem erfindungsgemäßen Gehäuse ausgebildet.

Damit bringt ein erfindungsgemäßes Befestigungssystem die gleichen Vorteile mit sich, wie sie ausführlich mit Bezug auf ein erfindungsgemäßes Gehäuse beschrieben worden sind. Insbesondere ist damit eine zumindest teilweise Befestigung der Klappe am Gehäuse gewährleistet. Unter Befestigung kann insbesondere ein Herstellen einer Führungswirkung und/oder eine Begrenzung der Öffnungsbewegung für die Klappe am Gehäuse während der Öffnungsbewegung der Klappe verstanden werden. Durch die vereinfachte Herstellung des Gehäuses ergibt sich somit eine insgesamt vereinfachte Herstellung des Befestigungssystems, wobei das Führungsmittel entsprechend an die Gegebenheiten der Befestigungsöffnung angepasst sein kann.

Bei einem erfindungsgemäßen Befestigungssystem ist ferner denkbar, dass das Führungsmittel ein Rotationselement umfasst, welches durch die Befestigungsöffnung hindurchragt. Dadurch kann sich ein Teil, insbesondere der größere Teil, des Rotationselementes zur ersten Seite erstrecken, so dass der dadurch entstehende Bauraum auf der zweiten Seite anderweitig nutzbar sein kann. Insbesondere kann dadurch der Abstand zwischen Wandung und Fach reduziert werden. Insbesondere kann dabei in dem Rotationselement ein Schienenelement geführt sein, durch welches die Klappe translatorisch und/oder rotatorisch koppelbar ist. Das Rotationselement dient somit vorzugsweise als Gleitlager in der Befestigungsöffnung. Dazu kann das Rotationselement vorzugsweise einen Kunststoff aufweisen oder aus Kunststoff bestehen. Vorzugsweise kann das Rotationselement zylinderartig ausgestaltet sein, insbesondere wobei eine Oberfläche hinsichtlich ihrer Reibungseigenschaften bearbeitet ist. Somit kann beispielsweise das Rotationselement zumindest lokal poliert sein oder eine Beschichtung aufweisen, welche gute Reibungseigenschaften insbesondere mit der Wandung des Gehäuses aufweist. Vorzugsweise kann eine Rotationsachse des Rotationselementes dabei parallel zu einer Scharnierachse der Klappe ausgerichtet sein. Somit kann die Rotationsachse des Rotationselements insbesondere zumindest im Wesentlichen senkrecht zur Wandung bzw. zum ersten und/oder zweiten Flächenbereich der Wandung ausgerichtet sein. Insbesondere kann die Klappe an einem Scharnier, insbesondere des Gehäuses, gelagert sein und durch das Führungsmittel vorzugsweise zusätzlich geführt werden. Dadurch kann eine Schwenkbewegung der Klappe ermöglicht sein, welche eine stabile, möglichst spielfreie Öffnungsbewegung der Klappe ermöglicht. Das Schienenelement kann somit eine Verbindung von Rotationselement und Klappe ermöglichen und sich gleichzeitig vorzugsweise relativ zum Rotationselement bewegen. Dazu kann das Schienenelement zumindest abschnittsweise u-artig ausgebildet sein, um eine sichere Führung im Rotationselement zu gewährleisten. Zusätzlich oder alternativ kann das Schienenelement vorteilhafterweise zumindest abschnittsweise einen doppel-T-förmigen Querschnitt oder einen rechteckigen Querschnitt aufweisen. Die Schwenkbewegung der Klappe kann somit insgesamt dadurch realisiert sein, dass zum einen sich das Schienenelement relativ zum Rotationselement bewegt und damit einen Öffnungsweg der Klappe ermöglicht und gleichzeitig sich das Rotationselement in der Befestigungsöffnung dreht, um die Schwenkbewegung der Klappe und des Schienenelementes zu ermöglichen. Alternativ ist es jedoch auch denkbar, dass das Schienenelement derart an der Klappe gelagert ist, dass eine Drehung des Rotationselementes nicht notwendig ist und das Rotationselement beispielsweise zur Montage mittels eines Bajonettverschlusses lediglich bei der Montage der Befestigungsöffnung gedreht wird.

Es ist ferner denkbar, dass bei einem erfindungsgemäßen Befestigungssystem das Rotationselement einen ersten und einen zweiten Vorsprung aufweist, wobei der erste und der zweite Vorsprung zur Montage des Rotationselementes an der Wandung durch einen Montageausschnitt der Befestigungsöffnung hindurchsteckbar sind, insbesondere so dass der erste und der zweite Vorsprung im Montagezustand an der ersten Seite der Wandung anliegen. Somit kann das Rotationselement vorzugsweise von der zweiten zur ersten Seite durch die Befestigungsöffnung hindurchgesteckt werden, um bei Drehung des Rotationselementes in den Montagezustand überführt zu werden und mittels der Vorsprünge bajonettverschlussartig formschlüssig befestigt zu werden. Somit ist durch den ersten und zweiten Vorsprung des Rotationselements bei Verdrehung in den Montagezustand vorzugsweise ein Formschluss mit der Wandung gebildet. Insbesondere ist dabei ein Verdrehungswinkel zur Montage größer, als ein Verdrehungswinkel bei einer rotatorischen Führung der Klappe durch das Rotationselement. Vorzugsweise können sich der erste und der zweite Vorsprung gegenüberliegen bzw. kann der erste Vorsprung einen Winkel von etwa 180° zum zweiten Vorsprung aufweisen. Die Schwenkbewegung der Klappe verursacht insbesondere lediglich eine geringe Winkelverstellung, so dass eine Gefahr, dass die Vorsprünge aus den Montageausschnitten herausfallen, im Betrieb nicht gegeben ist. Durch den ersten und zweiten Vorsprung und den Formschluss kann somit die Herstellung des Befestigungssystems weiter vereinfacht sein, da das Gehäuse insbesondere werkzeugfallend verwendet werden kann und das Rotationselement mittels eines einfachen Steck- bzw. Bajonettprinzips an der Wandung montiert werden kann. Somit kann vorzugsweise kein weiteres Werkzeug notwendig sein, um das Führungsmittel am Gehäuse zu montieren. Vorzugsweise sind der erste und/oder der zweite Vorsprung einstückig mit dem Rotationselement ausgebildet. Dadurch kann die Herstellung und Handhabung zur Montage des Rotationselementes weiter vereinfacht sein.

Im Rahmen der Erfindung kann ferner vorgesehen sein, dass das Rotationselement einen dritten und einen vierten Vorsprung aufweist, wobei der dritte und vierte Vorsprung an einer zweiten Seite der Wandung anliegen. Vorzugsweise handelt es sich bei der zweiten Seite um die der ersten Seite gegenüberliegende Seite. Insbesondere können der dritte und/oder der vierte Vorsprung einstückig mit dem Rotationselement ausgebildet sein. Durch den dritten und vierten Vorsprung kann somit der Formschluss des ersten und zweiten Vorsprungs verbessert sein. Somit ist durch den dritten und vierten Vorsprung beispielsweise eine Kippgefahr des Rotationselements in der Befestigungsöffnung reduziert. Dadurch können beispielsweise Toleranzen der Befestigungsöffnung und/oder des Rotationselements erhöht sein, was sich wiederum positiv auf die Herstellkosten des Gehäuses und/oder des Rotationselements auswirken kann. Gleichzeitig kann eine sichere Führung und ein geringes Spiel der Bauteile zueinander durch den dritten und vierten Vorsprung gewährleistet sein. Vorzugsweise kann der dritte Vorsprung dem ersten Vorsprung und der vierte Vorsprung dem zweiten Vorsprung zugeordnet sein, so dass jeweils zwei Vorsprünge einen Teil der Wandung, insbesondere eine Randseite der Befestigungsöffnung, einschließen. Insbesondere können sich somit jeweils zwei Vorsprünge zumindest im Wesentlichen gegenüberliegen.

Es ist bei einem erfindungsgemäßen Befestigungssystem ferner denkbar, dass das Führungsmittel ein Dämpferelement aufweist, durch welches eine Relativbewegung des Schienenelements zum Rotationselement dämpfbar ist, und/oder dass das Führungsmittel ein Antriebselement aufweist, durch welches eine Relativbewegung des Schienenelements zum Rotationselement initiierbar ist. Durch das Dämpferelement kann die Führung der Klappe verbessert sein, so dass diese bei der Öffnungsbewegung der Klappe nicht, insbesondere den Fahrzeuginsassen entgegen, ungebremst herunterfällt, sondern stattdessen gedämpft und langsam öffnet. Somit kann die Öffnungsbewegung als solche durch das Dämpferelement verbessert sein, und gleichzeitig bietet die Unterbringung des Dämpferelements in dem Führungsmittel eine einfache Möglichkeit der Herstellung des Befestigungssystems, da beispielsweise das Führungsmittel vormontiert sein kann und anschließend mittels eines Bajonettverschlusses an der Wandung des Gehäuses montiert werden kann, ohne dass auch am Gehäuse zusätzliche Dämpferelemente notwendig sein können.

Durch das Antriebselement kann beispielsweise die Klappe mittels eines Schalters automatisch geöffnet werden, so dass eine manuelle Öffnung des Ablagefachs nicht notwendig ist und ein Komfort des Benutzers erhöht sein kann. Die Unterbringung des Antriebselementes im Führungsmittel kann somit ferner vorzugsweise ebenfalls die Montage des Befestigungssystems vereinfachen, indem das Führungsmittel als separate Baueinheit vormontierbar ist, bevor dieses an der Wandung des Gehäuses montiert wird. Das Antriebselement kann ferner pneumatisch, hydraulisch und/oder elektrisch ausgeführt sein. So ist es beispielsweise denkbar, dass ein Pneumatikzylinder am Schienenelement geführt ist oder dass das Antriebselement als Elektromotor ausgeführt ist.

Das Dämpferelement kann ferner pneumatisch und/oder hydraulisch und/oder mechanisch und/oder als Wirbelstrombremse ausgeführt sein und/oder einen viskosen Dämpfer umfassen. Insbesondere kann das Dämpferelement einen Pneumatikzylinder umfassen, der am Schienenelement angeordnet ist und die Relativbewegung des Schienenelements zum Rotationselement dämpft. Zusätzlich oder alternativ kann das Dämpferelement und/oder das Schienenelement einen Anschlag für das Rotationselement aufweisen. Der Anschlag kann beispielsweise einen Keil umfassen, welcher die Bewegung der Klappe begrenzen kann und/oder als Reibungsbremse ausgeführt sein kann. Ferner kann das Dämpferelement mit einem Verzahnungsbereich des Schienenelementes zusammenwirken, wobei beispielsweise eine Rotation eines auf dem Verzahnungsbereich abrollenden Zahnrades gedämpft sein kann.

Es ist bei einem erfindungsgemäßen Befestigungssystem ferner denkbar, dass das Führungsmittel einen elektrischen Anschluss aufweist, durch welchen eine elektrische Verbindung durch die Befestigungsöffnung hindurch realisierbar ist, insbesondere wobei das Führungsmittel ein Schaltelement aufweist, mittels dessen bei einer Bewegung der Klappe ein elektrisches Signal erzeugbar ist. Zusätzlich oder alternativ kann durch das Schaltelement bei einer Bewegung der Klappe die elektrische Verbindung schließbar und/oder unterbrechbar sein. Somit kann vorzugsweise durch das Rotationselement eine Leitung geführt sein, so dass innerhalb des Gehäuses, insbesondere innerhalb des Ablagefachs, eine elektrische Verbindung gewährleistbar ist. Insbesondere kann dadurch beispielsweise eine Beleuchtung des Ablagefachs realisiert sein und/oder ein Schalter, welcher beispielsweise bei Öffnung des Ablagefachs bzw. der Klappe betätigt wird. Insbesondere kann das Führungsmittel einen Anschlusskontakt aufweisen, durch welchen eine Energiequelle und/oder ein Verbraucher, beispielsweise eine Beleuchtung des Ablagefachs, an den elektrischen Anschluss angeschlossen werden kann, insbesondere um diesen mit der Fahrzeugelektrik und/oder mit dem Verbraucher zu verbinden. Das Schaltelement kann beispielsweise einen keilförmigen Anschlag umfassen, welcher bei einer Relativbewegung des Rotationselementes zum Schienenelement eine elektrische Verbindung des elektrischen Anschlusses mit einem Verbraucher, insbesondere innerhalb des Ablagefachs, insbesondere mittelbar, z.B. durch Betätigung eines Schalters, ermöglicht. Dadurch kann beispielsweise ein Leuchtmittel zur Beleuchtung des Ablagefachs bei der Öffnungsbewegung der Klappe automatisch ausgelöst werden. Insbesondere kann durch das Schaltelement ein elektrisches Signal in Abhängigkeit der Bewegung der Klappe erzeugbar sein, durch welches die Lage der Klappe detektierbar ist und/oder ein Verbraucher angesteuert werden kann. Dazu kann ein Steuergerät vorgesehen sein, welches das Signal verarbeitet. Das Schaltelement kann die Erzeugung des Signals ferner mittelbar oder unmittelbar bewirken. Das Schaltelement kann ferner beispielsweise im oder am Rotationselement angeordnet sein und insbesondere selbst einen Schalter umfassen, oder das Schaltelement kann zur Betätigung eines zusätzlichen Schalters dienen und vorzugsweise am Schienenelement angeordnet sein.

Gemäß einem weiteren Aspekt der Erfindung ist ein Verfahren zum Herstellen eines Gehäuses für ein Ablagefach eines Fahrzeuges beansprucht. Es handelt sich bei dem Gehäuse um ein erfindungsgemäßes Gehäuse. Das Gehäuse weist ferner eine Wandung mit einer Befestigungsöffnung zum Anordnen eines Führungsmittels eines Befestigungssystems auf. Insbesondere kann das Befestigungssystem ein erfindungsgemäßes Befestigungssystem sein. Das Verfahren zum Herstellen des Gehäuses umfasst ferner die folgenden Schritte:
- Bereitstellen eines Formwerkzeugs mit zumindest einem ersten und einem zweiten Formelement, die zumindest teilweise eine Kavität formen, welche zumindest teilweise eine Negativform des Fahrzeugbauteils ausbildet, wobei das erste und zweite Formelement einen Kontaktbereich abdichten, in welchem die Befestigungsöffnung, insbesondere beim Befüllen der Kavität, zumindest bereichsweise bildbar ist,
- Befüllen der Kavität mit einem Material des Gehäuses,
- Entformen des ersten und zweiten Formelements, insbesondere so dass die Wandung mit der Befestigungsöffnung dem Formwerkzeug entnommen werden kann.

Vorzugsweise kann die Befestigungsöffnung beim Befüllen der Kavität, d.h. insbesondere beim Gießvorgang, automatisch gebildet werden. Das Entformen des ersten und zweiten Formelements wird vorzugsweise entlang einer Hauptentformungsrichtung durchgeführt, wobei das erste Formelement vorzugsweise in einer Richtung entfernt wird, welche einer Entformungsrichtung des zweiten Formelements entgegengesetzt ist. Insbesondere kann die Kavität beim Befüllen, vorzugsweise durch einen Kunststoff-Spritzgussprozess, vollständig ausgefüllt werden. Unter der Negativform des Gehäuses kann somit eine Form verstanden werden, welche Bereiche für einen Materialfluss beim Ausfüllen der Kavität begrenzt, so dass das Material des Gehäuses nicht in diese Bereiche vordringt. Insbesondere kann die Kavität dabei größer ausgeführt sein als das herzustellende Gehäuse, wenn das Material beispielsweise beim Abkühlen schrumpft. Das erste und zweite Formelement können vorzugsweise einander kontaktieren und/oder miteinander im Bereich der herzustellenden Befestigungsöffnung abgedichtet sein. Insbesondere kann der Kontaktbereich somit auch als Formtrennung bezeichnet werden. Die Befestigungsöffnung kann somit beispielsweise in zwei Richtungen vom Kontakt der Formwerkzeuge entstehen. Insbesondere kann das erste Formwerkzeug einen Bereich umfassen, welcher am ersten Flächenbereich anliegt. Das zweite Formwerkzeug kann einen Bereich, welcher am zweiten Flächenbereich anliegt, umfassen, insbesondere wobei das erste Formwerkzeug insbesondere senkrecht an den herzustellenden zweiten Flächenbereich angrenzt. Ein erfindungsgemäßes Verfahren zum Herstellen eines Gehäuses bringt somit die gleichen Vorteile mit sich, wie sie ausführlich mit Bezug auf ein erfindungsgemäßes Gehäuse und/oder mit Bezug auf ein erfindungsgemäßes Befestigungssystem beschrieben worden sind. Insbesondere ist somit eine einfache Herstellung des Gehäuses möglich, ohne dass die Befestigungsöffnung nachträglich eingebracht wird oder dass ein Schieber für die Befestigungsöffnung notwendig ist. Um die Wandung und die Befestigungsöffnung zumindest teilweise zu realisieren, reichen somit vorzugsweise das erste und zweite Formelement.

Weitere, die Erfindung verbessernde Maßnahmen ergeben sich aus der nachfolgenden Beschreibung zu einigen Ausführungsbeispielen der Erfindung, welche in den Figuren schematisch dargestellt sind. Sämtliche aus den Ansprüchen, der Beschreibung und/oder den Zeichnungen hervorgehenden Merkmale und/oder Vorteile, einschließlich konstruktiver Einzelheiten, räumlicher Anordnungen und Verfahrensschritte, können sowohl für sich als auch in den verschiedensten Kombinationen erfindungswesentlich sein. Dabei ist zu beachten, dass die Figuren nur beschreibenden Charakter haben und nicht dazu gedacht sind, die Erfindung in irgendeiner Form einzuschränken. Es zeigen:
- Fig. 1:: ein erfindungsgemäßes Befestigungssystem mit einem erfindungsgemäßen Gehäuse in schematischer Perspektivansicht in einem ersten Ausführungsbeispiel,
- Fig. 2a, 2b:: Detailansichten eines Führungsmittels des erfindungsgemäßen Befestigungssystems gemäß dem ersten Ausführungsbeispiel,
- Fig. 3:: das erfindungsgemäße Befestigungssystem des ersten Ausführungsbeispiels mit einem elektrischen Anschluss in schematischer Ansicht,
- Fig. 4a - 4c:: mögliche Ausführungsformen eines Führungsmittels für ein erfindungsgemäßes Befestigungssystem in weiteren Ausführungsbeispielen,
- Fig. 5a - 5c:: geschnittene Teilansichten eines erfindungsgemäßen Gehäuses in weiteren Ausführungsbeispielen,
- Fig. 6:: ein Formwerkzeug zur Ausführung eines erfindungsgemäßen Verfahrens in einem weiteren Ausführungsbeispiel,
- Fig. 7:: ein Fahrzeug mit einem erfindungsgemäßen Gehäuse in einem weiteren Ausführungsbeispiel.

In den nachfolgenden Figuren werden für die gleichen technischen Merkmale auch von unterschiedlichen Ausführungsbeispielen die identischen Bezugszeichen verwendet.

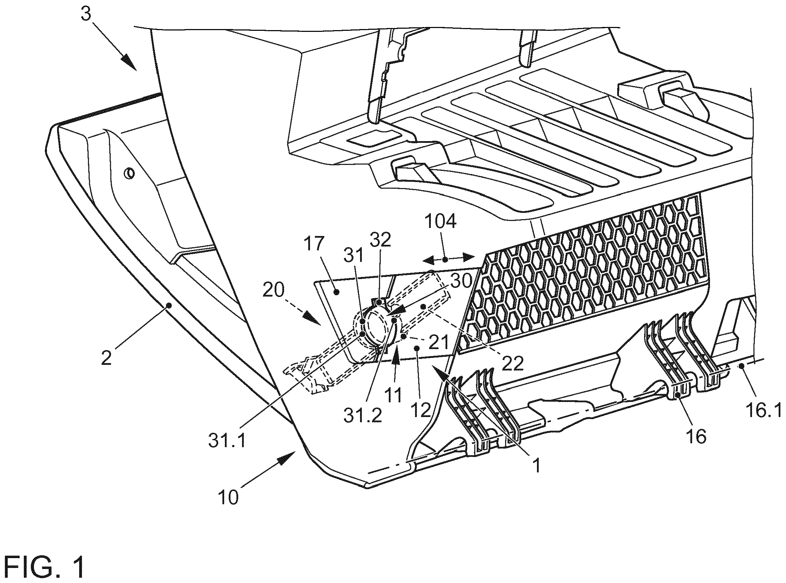

Figur 1 zeigt ein erfindungsgemäßes Befestigungssystem 1 in einem ersten Ausführungsbeispiel in schematischer Ansicht. Das Befestigungssystem 1 weist dabei ein Gehäuse 10 für ein Ablagefach 3 eines Fahrzeuges 4 auf. Dabei ist über ein Scharnier 16 eine Klappe 2 schwenkbeweglich um eine Scharnierachse 16.1 gelagert. Ferner ist die Klappe 2 über ein Führungsmittel 20 (in Figur 1 gestrichelt dargestellt) am Gehäuse 10 translatorisch und/oder rotatorisch gelagert. Das Gehäuse 10 weist dabei eine Wandung 11 auf. Insbesondere ist die Wandung 11 als Kunststoff-Spritzgussteil ausgeführt. In der Wandung 11 ist eine Befestigungsöffnung 30 vorgesehen, um das Führungsmittel 20 am Gehäuse 10 zu befestigen und damit die Klappe 2 am Gehäuse 10 zu führen. Die Befestigungsöffnung 30 grenzt dabei an einen ersten Flächenbereich 12 der Wandung 11 an. Ferner weist die Befestigungsöffnung 30 eine Mantelfläche 31 auf, welche zumindest teilweise über den ersten Flächenbereich 12 hinausragt. Die Mantelfläche 31 bildet somit einen Rand der Befestigungsöffnung 30, wobei eine erste Randseite 31.1 zu einer zweiten, der ersten Randseite 31.1 gegenüberliegenden Randseite 31.2 versetzt ist. Der erste Flächenbereich 12 bildet dabei insbesondere zumindest einen Teil der Oberfläche der Wandung 11 aus, welcher zu einem weiteren Flächenbereich 17 der Oberfläche versetzt ist. Insbesondere umgibt die Mantelfläche 31 einen Durchgang der Befestigungsöffnung 30 teilweise oder vollumfänglich. Dadurch kann das Gehäuse 10 entlang einer Hauptentformungsrichtung 104 zu zwei Seiten entformt werden, wobei gleichzeitig die Befestigungsöffnung 30 entsteht. Im Bereich der Befestigungsöffnung 30 kontaktiert ein Formwerkzeug 100 bei der Herstellung des Gehäuses 10, so dass ein Schieber zur Einformung der Befestigungsöffnung 30 nicht notwendig ist.

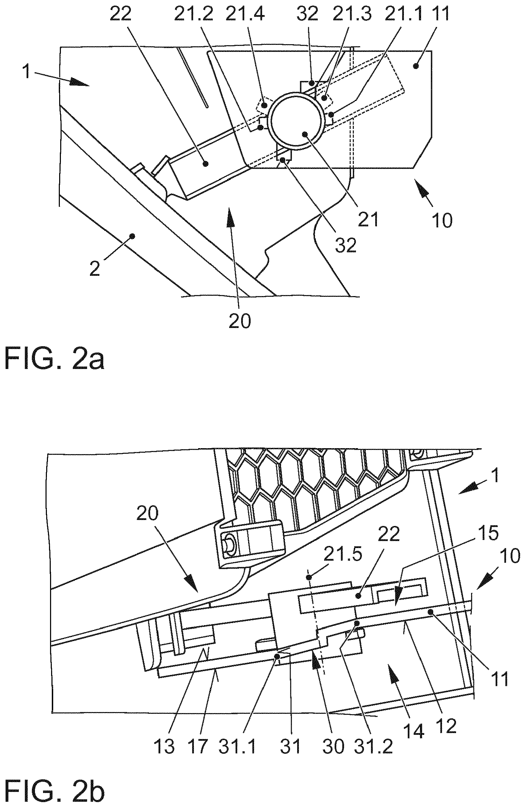

Die Figuren 2a und 2b zeigen das Befestigungssystem 1 in weiteren Detailansichten des ersten Ausführungsbeispiels. So zeigt Figur 2a eine Seitenansicht des Führungsmittels 20 an der Wandung 11. Das Führungsmittel 20 weist ein Rotationselement 21 auf, welches zumindest bereichsweise gleitlagerartig in der Befestigungsöffnung 30 geführt wird. Dazu sind das Rotationselement 21 und die Befestigungsöffnung 30 zumindest teilweise zylinderartig ausgebildet. Zusätzlich oder alternativ kann das Rotationselement 21 oder die Befestigungsöffnung 30 eine Geometrie aufweisen, die nicht zylinderartig ist, aber eine Drehung des Rotationselements 21 ermöglicht. Beispielsweise kann das Rotationselement 21 oder die Befestigungsöffnung 30 ellipsenförmig ausgebildet sein Ferner weist die Befestigungsöffnung 30 zwei Montageausschnitte 32 auf, durch welche ein erster und ein zweiter Vorsprung 21.1, 21.2 des Rotationselements 21 bei der Montage hindurchsteckbar sind. Der erste Vorsprung 21.1 liegt am ersten Flächenbereich 12 und der zweite Vorsprung 21.2 an einer ersten Seite 14 der Wandung 11 auf der gegenüberliegenden Seite der Befestigungsöffnung 30 an. Darüber hinaus weist das Rotationselement 21 einen dritten und einen vierten Vorsprung 21.3, 21.4 auf, welche korrespondierend mit dem ersten und zweiten Vorsprung 21.1, 21.2 einen Formschluss bilden. Dadurch kann ein Spiel des Rotationselements 21 in der Befestigungsöffnung 30 reduziert sein. Zur Fügung der Klappe 2 des Ablagefachs 3 weist das Führungsmittel 20 ferner ein Schienenelement 22 auf, welches u-artig ausgebildet ist, um eine sichere, insbesondere lineare, Führung mit dem Rotationselement 21 gewährleisten zu können. Bei Verstellung der Klappe 2 bewegt sich das Schienenelement 22 relativ zum Rotationselement 21, um der Klappe 2 den Öffnungsweg zur Verfügung zu stellen. Ferner kann das Rotationselement 21 in der Befestigungsöffnung 30 sich drehen, um eine Schwenkbewegung der Klappe 2 gewährleisten zu können.

Figur 2b zeigt eine Rotationsachse 21.5 des Rotationselements 21, um welche das Rotationselement 21 bei der Schwenkbewegung der Klappe 2 dreht. Ferner geht aus Figur 2 noch einmal der Aufbau der Befestigungsöffnung 30 hervor. Dabei ist gezeigt, dass die Wandung 11 einen ersten Flächenbereich 12 aufweist, der eine erste Seite 14 der Wandung 11 zumindest teilweise ausbildet. Ferner weist die Wandung 11 einen zweiten Flächenbereich 13 auf, der eine zweite Seite 15 der Wandung 11 zumindest teilweise ausbildet. Die erste Seite 14 umfasst ferner einen weiteren Flächenbereich 17, welcher zum ersten Flächenbereich 12 erhöht ist und ebenfalls an die Befestigungsöffnung 30 angrenzt. Vorzugsweise können der erste und der weitere Flächenbereich 12, 17 gestuft oder stufenlos, insbesondere neben der Befestigungsöffnung 30, ineinander übergehen. Bei der ersten Seite 14 handelt es sich insbesondere um eine Außenseite und bei der zweiten Seite 15 um eine Innenseite der Wandung 11. Der zweite Flächenbereich 13 ist dabei gegenüber dem ersten Flächenbereich 12 in Richtung der ersten Seite 14 erhaben. Daher können zwei Formelemente 101, 102 eines Formwerkzeugs 100 in im Bereich der Befestigungsöffnung 30 aufeinander treffen bzw. kontaktieren, so dass bei der Entformung die Befestigungsöffnung 30 entsteht. Insbesondere ist die erste Randseite 31.1 gegenüber der zweiten Randseite 31.2 erhaben. Alternativ können der erste Flächenbereich und der zweite Flächenbereich 12, 13 beispielsweise in einer Ebene liegen, um die Entformung und das Entstehen der Befestigungsöffnung 30 realisieren zu können. Der erste und zweite Vorsprung 21.1, 21.2 sind ferner zueinander in Richtung der Rotationsachse 21.5 versetzt. Dadurch kann ein Formschluss an beiden Randseiten 31.1, 31.2 gewährleistet werden und eine Kippgefahr des Rotationselementes 21 reduziert sein.

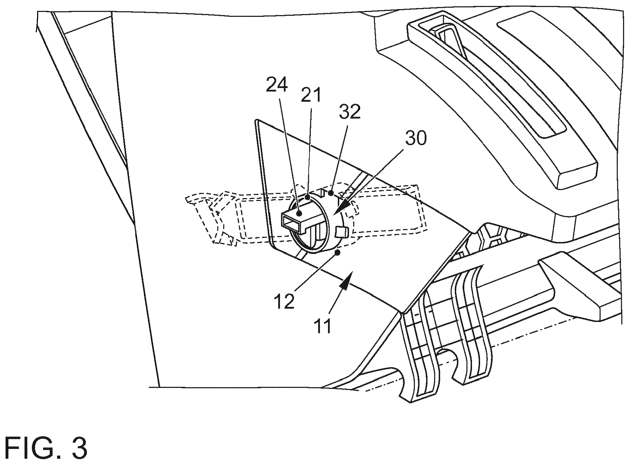

Figur 3 zeigt ferner das Befestigungssystem 1 mit dem Gehäuse 10 des ersten Ausführungsbeispiels. Dabei ist jedoch weiterhin ein elektrischer Anschluss 24 am Rotationselement 21 vorgesehen. Der elektrische Anschluss 24 führt dabei durch das Rotationselement 21 und die Wandung 11 zumindest teilweise hindurch. Dazu weist der elektrische Anschluss 24 einen Anschlussstecker auf. Vorzugsweise kann das Führungsmittel 20, insbesondere das Rotationselement 21, einen Schalter aufweisen, der in Abhängigkeit von einer Relativbewegung zwischen Rotationselement 21 und Schienenelement 22 öffnet und/oder schließt.

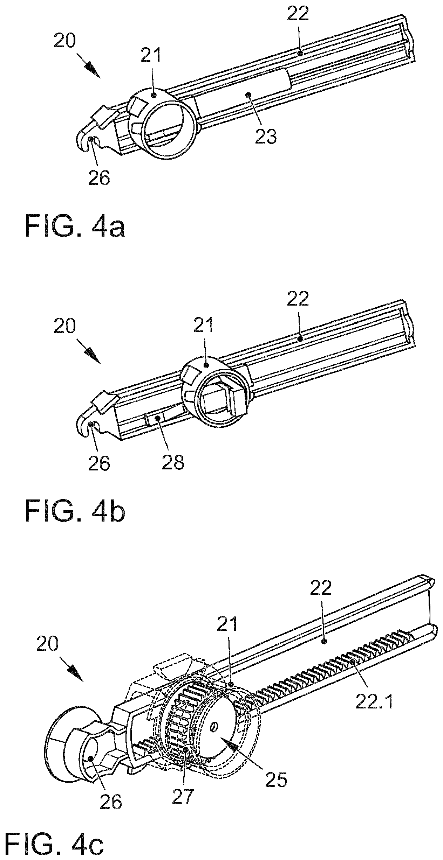

Die Figuren 4a bis 4c zeigen mögliche Ausführungsformen eines Führungsmittels 20. Figur 4a zeigt ein Führungsmittel 20 mit einem Rotationselement 21 und einem Schienenelement 22. Am Schienenelement 22 ist dabei ferner ein Dämpferelement 23 angeordnet, welches als pneumatischer und/oder hydraulischer Zylinder ausgeführt ist. Dadurch kann eine Bewegung des Schienenelementes 22 relativ zum Rotationselement 21 gedämpft werden bzw. die Bewegung gestoppt werden. Zusätzlich oder alternativ zum Dämpferelement 23 kann ein Pneumatik und/oder Hydraulikzylinder vorgesehen sein, welcher einen Antrieb bewirkt. Somit kann eine Klappe 2 automatisch geöffnet werden und die Öffnungsbewegung durch den Pneumatik und/oder Hydraulikzylinder initiiert werden. Zur Anbindung des Schienenelementes 22 an die Klappe 2 weist das Schienenelement 22 ein Klappenlager 26 auf, welches zur rotatorischen Lagerung der Klappe 2 ausgebildet ist. Figur 4b zeigt ein Führungsmittel 20 mit einem Schienenelement 22 und einem Rotationselement 21. Dabei kann sich das Schienenelement 22 relativ zum Rotationselement 21 bewegen, wobei in Abhängigkeit von der Bewegung ein Schaltelement 28 ein Schließen eines elektrischen Kontaktes bewirken kann. Das Schaltelement kann vorzugsweise eine Schaltnocke umfassen und/oder keilförmig ausgebildet sein, so dass beim Auffahren des Rotationselements 21 auf das Schaltelement 28 ein Stromkreis geschlossen wird. Insbesondere kann je nach Position des Rotationselementes 21 zum Schaltelement 28 ein Signal erzeugbar sein, um dadurch die Lage der Klappe 2 zu erfassen. Zusätzlich oder alternativ kann ein mechanischer, insbesondere keilförmiger Anschlag vorgesehen sein, durch den sich die Reibung vergrößert und die Bewegung begrenzt wird. Figur 4c zeigt ferner ein Führungsmittel 20 mit einem Schienenelement 22, welches sich relativ zu einem Rotationselement 21 bewegen kann. Dabei weist das Rotationselement 21 ein Antriebselement 25 auf, welches eine Abrollbewegung eine Zahnrads 27 auf einem Zahnstangenelement 22.1 des Schienenelementes 22 bewirkt werden kann. Insbesondere kann das Antriebselement 25 zumindest einen Teil eines Elektromotors umfassen. Zusätzlich oder alternativ kann das Rotationselement 21 ein Dämpferelement umfassen, welches beispielsweise mit den Zähnen des Zahnrads 27 wirkt, um die Dämpfungswirkung zu entfalten.

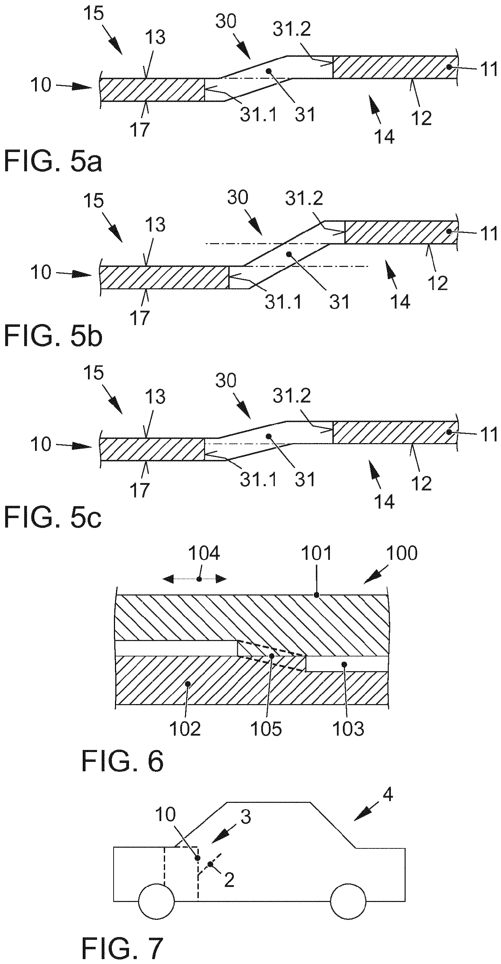

Die Figuren 5a bis 5c zeigen weitere Ausführungsformen einer Wandung 11 eines erfindungsgemäßen Gehäuses 10 in schematischer geschnittener Teilansicht. Das Gehäuse 10 weist dabei die Wandung 11 auf mit einer ersten Seite 14 und einer zweiten Seite 15. Die erste Seite 14 ist dabei zumindest teilweise durch einen ersten Flächenbereich 12 gebildet und die zweite Seite 15 ist zumindest teilweise durch einen zweiten Flächenbereich 13 gebildet. Der erste und der zweite Flächenbereich 12, 13 grenzen an eine Befestigungsöffnung 30 an. Die Befestigungsöffnung 30 weist eine Mantelfläche 31 auf, welche zumindest teilweise, d. h. zumindest in einem ersten Randbereich 31.1 der Mantelfläche 31, über den ersten Flächenbereich 12 hinausragt. Insbesondere ist der erste Randbereich 31.1 der Mantelfläche 31 gegenüber einem zweiten Randbereich 31.2, der an den ersten Flächenbereich 12 angrenzt, versetzt, so dass der erste und der zweite Flächenbereich 12, 13 in einer Ebene liegen. Dadurch können im Bereich der Befestigungsöffnung 30 bei der Herstellung der Wandung 11 Formelemente 101, 102 eines Formwerkzeuges 100 kontaktieren und entsprechend entformt werden. Figur 5b zeigt die Ausgestaltung der Wandung 11 gemäß Figur 5a, wobei jedoch der erste und zweite Flächenbereich 12, 13, nicht in einer Ebene liegen, sondern wobei der zweite Flächenbereich 13 gegenüber dem ersten Flächenbereich 12 in Richtung der ersten Seite 14 erhaben ist. Dies begünstigt eine Entformung bei der Herstellung der Wandung 11. Figur 5c zeigt ferner eine weitere Ausgestaltung der Wandung 11 bzw. der Befestigungsöffnung 30 gemäß der Figuren 5a und 5b, wobei jedoch die Befestigungsöffnung 30 derart ausgestaltet ist, dass der zweite Flächenbereich 13 mit dem ersten Flächenbereich 12 im Wesentlichen in einer Ebene liegt, jedoch nicht vollständig. Bei einem geringen Versatz des ersten und zweiten Flächenbereichs 12, 13 ist hierbei noch immer eine Zwangsentformung der Formelemente 101, 102 des Formwerkzeugs 100 möglich, wenn diese geringfügig in die Befestigungsöffnung 30 eingreifen. Insbesondere kann die Wandung 11 dabei ein flexibles Material aufweisen und/oder die Befestigungsöffnung 30 kann eine Fase aufweisen, um die Zwangsentformung zu begünstigen.

Figur 6 zeigt ein Formwerkzeug 100 zur Durchführung eines erfindungsgemäßen Herstellverfahrens mit einer Hauptentformungsrichtung 104. Dabei ist ein erstes Formelement 101 und ein zweiten Formelement 102 vorgesehen, welche zumindest teilweise eine Negativform einer Wandung 11 des Gehäuses 10 und vorzugsweise zwei Hälften des Formwerkzeugs 100 bilden. Durch die Formelemente 101, 102 ist ferner eine Kavität 103 gebildet, in welcher die Wandung 11 eines Gehäuses 10 für ein Ablagefach 3 herstellbar ist. Die Kavität 103 kann dazu mit einem Gussmaterial zur Herstellung der Wandung 11 befüllt, insbesondere ausgefüllt, werden. In einem Kontaktbereich 105, d.h. einem Bereich einer herzustellenden Befestigungsöffnung 30 der Wandung 11, ist jedoch ferner vorgesehen, dass die Formelemente 101, 102 einander kontaktieren bzw. gegeneinander abgedichtet sind, so dass beim Befüllen der Kavität 103 kein Material in den Kontaktbereich 105 eindringt und folglich beim Entformen der Formelemente 101, 102 des Formwerkzeugs 100 die Befestigungsöffnung 30 automatisch entsteht. Die Kavität 103 ist somit im Kontaktbereich 105 unterbrochen. Auf den gegenüberliegenden Seiten des Kontaktbereiches 105, weist die Kavität 103 einen Versatz auf. Dadurch entsteht beim Gießvorgang eine Mantelfläche 31 der Befestigungsöffnung 30, welche zumindest teilweise über den ersten Flächenbereich 12 hinausragt. Insbesondere ist ein gestufter Randbereich vorgesehen, der den Kontaktbereich 105 umgibt, so dass die Kavität 103 vollständig verbunden ist. Eine zusätzliche Bearbeitung der Wandung 11 zur Herstellung der Befestigungsöffnung 30 kann dabei nicht notwendig sein. Das Entformen der Formelemente 101, 102 wird insbesondere dadurch durchgeführt, dass die Formelemente 101, 102 entlang der Hauptentformungsrichtung 104 voneinander entfernt werden. Dies kann vorzugsweise durch Bewegung lediglich eines der Formelemente 101, 102 durchgeführt werden. Insbesondere kann die Wandung 11 eine Entformungsschräge aufweisen bzw. schräg verlaufen, um die Entformung der Formelemente 101, 102 zu begünstigen.

Figur 7 zeigt ferner ein Fahrzeug 4 mit einem erfindungsgemäßen Gehäuse 10 für ein Ablagefach 3, welches über eine Klappe 2 geöffnet werden kann. Dabei ist das Ablagefach 3 als Handschuhfach des Fahrzeugs 4 ausgebildet. Vorzugsweise kann das Gehäuse 10 gemäß einem Gehäuse der vorangehenden Ausführungsbeispiele ausgebildet sein.

Die voranstehende Erläuterung der Ausführungsform beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

### Bezugszeichenliste

- 1: Befestigungssystem
- 2: Klappe
- 3: Ablagefach
- 4: Fahrzeug

- 10: Gehäuse
- 11: Wandung
- 12: erster Flächenbereich
- 13: zweiter Flächenbereich
- 14: erste Seite
- 15: zweite Seite
- 16: Scharnier
- 16.1: Scharnierachse
- 17: weiterer Flächenbereich

- 20: Führungsmittel
- 21: Rotationselement
- 21.1: erster Vorsprung
- 21.2: zweiter Vorsprung
- 21.3: dritter Vorsprung
- 21.4: vierter Vorsprung
- 21.5: Rotationsachse
- 22: Schienenelement
- 22.1: Zahnstangenelement
- 23: Dämpferelement
- 24: Anschluss
- 25: Antriebselement
- 26: Klappenlager
- 27: Zahnrad
- 28: Schaltelement

- 30: Befestigungsöffnung
- 31: Mantelfläche
- 31.1: erste Randseite
- 31.2: zweite Randseite
- 32: Montageausschnitt

- 100: Formwerkzeug
- 101: erstes Formelement
- 102: zweites Formelement
- 103: Kavität
- 104: Hauptentformungsrichtung
- 105: Kontaktbereich

## Patentansprüche

1. Gehäuse (10) für ein Ablagefach (3) eines Fahrzeuges (4), aufweisend eine Wandung (11) mit einem ersten Flächenbereich (12), der eine erste Seite (14) der Wandung (11) zumindest teilweise ausbildet, und einer Befestigungsöffnung (30), die an den ersten Flächenbereich (12) angrenzt,
wobei in der Befestigungsöffnung (30) ein Führungsmittel (20) zum Führen einer Öffnungs- und/oder Schließbewegung einer Klappe (2) des Ablagefachs (3) anordbar ist, **dadurch gekennzeichnet,**
**dass** die Befestigungsöffnung (30) eine Mantelfläche (31) aufweist, welche teilweise über den ersten Flächenbereich (12) hinausragt, wobei ein weiterer Flächenbereich (17) einen weiteren Teil der ersten Seite (14) ausbildet, wobei der erste und der weitere Flächenbereich (12, 17) durch eine Stufe getrennt sind oder stufenlos durch eine Schräge ineinander übergehen.

2. Gehäuse (10) nach Anspruch 1,
**dadurch gekennzeichnet,**
**dass** ein zweiter Flächenbereich (13) einer zweiten Seite (15) der Wandung (11) an die Befestigungsöffnung (30) angrenzt, wobei der zweite Flächenbereich (13) mit dem ersten Flächenbereich (12) zumindest im Wesentlichen in einer Ebene liegt oder gegenüber dem ersten Flächenbereich (12) in Richtung der ersten Seite (14) erhaben ist.

3. Gehäuse (10) nach einem der Ansprüche 1 bis 2,
**dadurch gekennzeichnet,**
**dass** die Mantelfläche (31) zur rotatorischen Führung des Führungsmittels (20) zumindest bereichsweise zylinderartig ausgebildet ist, insbesondere wobei die Befestigungsöffnung (30) einen Montageausschnitt (32) aufweist, durch welchen zumindest ein erster Vorsprung (21.1) eines Rotationselements (21) des Führungsmittels (20) hindurchsteckbar ist.

4. Befestigungssystem (1) zur zumindest teilweisen Befestigung einer Klappe (2) eines Ablagefachs (3) eines Fahrzeuges (4), aufweisend
ein Führungsmittel (20) zum Führen einer Öffnungs- und/oder Schließbewegung der Klappe (2)
und ein Gehäuse (10) mit einer Wandung (11), welche eine Befestigungsöffnung (30) aufweist, wobei in der Befestigungsöffnung (30) das Führungsmittel (20) angeordnet ist,
**dadurch gekennzeichnet,**
**dass** das Gehäuse (10) gemäß einem der vorhergehenden Ansprüche ausgebildet ist.

5. Befestigungssystem (1) nach Anspruch 4,
**dadurch gekennzeichnet,**
**dass** das Führungsmittel (20) ein Rotationselement (21) umfasst, welches durch die Befestigungsöffnung (30) hindurchragt, insbesondere wobei in dem Rotationselement (21) ein Schienenelement (22) geführt ist, durch welches die Klappe (2) translatorisch und/oder rotatorisch koppelbar ist.

6. Befestigungssystem (1) nach Anspruch 5,
**dadurch gekennzeichnet,**
**dass** das Rotationselement (21) einen ersten und einen zweiten Vorsprung (21.1, 21.2) aufweist, wobei der erste und zweite Vorsprung (21.1, 21.2) zur Montage des Rotationselementes (21) an der Wandung (11) durch einen Montageausschnitt (32) der Befestigungsöffnung (30) hindurchsteckbar sind, insbesondere so dass der erste und zweite Vorsprung (21.1, 21.2) im Montagezustand an der ersten Seite (14) der Wandung (11) anliegen.

7. Befestigungssystem (1) nach einem der Ansprüche 5 bis 6,
**dadurch gekennzeichnet,**
**dass** das Rotationselement (21) einen dritten und einen vierten Vorsprung (21.3, 21.4) aufweist, wobei der dritte und vierte Vorsprung (21.3, 21.4) an einer zweiten Seite (15) der Wandung (11) anliegen.

8. Befestigungssystem (1) nach einem der Ansprüche 4 bis 7,
**dadurch gekennzeichnet,**
**dass** das Führungsmittel (20) ein Dämpferelement (23) aufweist, durch welches eine Relativbewegung des Schienenelementes (22) zum Rotationselement (21) dämpfbar ist und/oder dass das Führungsmittel (20) ein Antriebselement (25) aufweist, durch welches eine Relativbewegung des Schienenelementes (22) zum Rotationselement (21) initiierbar ist.

9. Befestigungssystem (1) nach einem der Ansprüche 4 bis 8,
**dadurch gekennzeichnet,**
**dass** das Führungsmittel (20) einen elektrischen Anschluss (24) aufweist, durch welchen eine elektrische Verbindung durch die Befestigungsöffnung (30) hindurch realisierbar ist, insbesondere wobei das Führungsmittel (20) ein Schaltelement (28) aufweist, durch welches bei einer Bewegung der Klappe (2) ein elektrisches Signal erzeugbar ist und/oder die elektrische Verbindung schließbar und/oder unterbrechbar ist.

10. Verfahren zum Herstellen eines Gehäuses nach einem der Ansprüche 1 bis 3 für ein Ablagefach (3) eines Fahrzeuges (4), wobei das Gehäuse (10) eine Wandung (11) mit einer Befestigungsöffnung (30) zum Anordnen eines Führungsmittels (20) eines Befestigungssystems (1), nach einem der Ansprüche 4 bis 9, aufweist umfassend die folgenden Schritte:
- Bereitstellen eines Formwerkzeuges (100) mit zumindest einem ersten und einem zweiten Formelement (101, 102), die zumindest teilweise eine Kavität (103) formen, welche zumindest teilweise eine Negativform des Gehäuses (10) ausbildet, wobei das erste und zweite Formelement (101, 102) einen Kontaktbereich (105) abdichten, in welchem die Befestigungsöffnung (30) zumindest bereichsweise bildbar ist,
- Befüllen der Kavität (103) mit einem Material des Gehäuses (10),
- Entformen des ersten und zweiten Formelementes (101, 102).

## Claims

1. Housing (10) for a storage compartment (3) of a vehicle (4), having
a wall (11) with a first surface region (12) which forms a first side (14) of the wall (11) at least partially, and a fastening opening (30), which is adjacent to the first surface region (12),
wherein, in the fastening opening (30), a guide means (20) for guiding an opening and/or closing movement of a flap (2) of the storage compartment (3) can be arranged,
**characterized in that**
the fastening opening (30) has a lateral surface (31), which partially projects beyond the first surface region (12), wherein a further surface region (17) forms a further part of the first side (14), wherein the first and the further surface regions (12, 17) are separated by a step or merge into one another steplessly by a slope.

2. Housing (10) according to claim 1,
**characterized in that**
a second surface region (13) of a second side (15) of the wall (11) adjoins the fastening opening (30), wherein the second surface region (13) lies at least substantially in one plane with the first surface region (12) or is raised relative to the first surface region (12) in the direction of the first side (14).

3. Housing (10) according to one of claims 1 or 2,
**characterized in that**
the lateral surface (31) for rotational guidance of the guide means (20) is of cylindrical design at least in regions - in particular, wherein the fastening opening (30) has a mounting cutout (32) through which at least a first projection (21.1) of a rotation element (21) of the guide means (20) can be inserted.

4. Fastening system (1) for at least partially fastening a flap (2) of a storage compartment (3) of a vehicle (4), having
a guide means (20) for guiding an opening and/or closing movement of the flap (2)
and a housing (10) with a wall (11), which has a fastening opening (30), wherein the guide means (20) is arranged in the fastening opening (30),
**characterized in that**
the housing (10) is formed according to one of the preceding claims.

5. Fastening system (1) according to claim 4,
**characterized in that**
the guide means (20) comprises a rotation element (21), which projects through the fastening opening (30) - in particular, wherein a rail element (22) is guided in the rotation element (21), by means of which rail element the flap (2) can be coupled translationally and/or rotationally.

6. Fastening system (1) according to claim 5,
**characterized in that**
the rotation element (21) has a first and a second projection (21.1, 21.2), wherein the first and second projections (21.1, 21.2), for mounting the rotation element (21) to the wall (11), are insertable through a mounting cutout (32) of the fastening opening (30) - in particular, such that the first and second projections (21.1, 21.2), in the mounted state, abut the first side (14) of the wall (11).

7. Fastening system (1) according to one of claims 5 through 6,
**characterized in that**
the rotation element (21) has a third and a fourth projection (21.3, 21.4), wherein the third and fourth projections (21.3, 21.4) abut a second side (15) of the wall (11).

8. Fastening system (1) according to one of claims 4 through 7,
**characterized in that**
the guide means (20) has a damping element (23), by means of which a relative movement of the rail element (22) with respect to the rotation element (21) can be dampened, and/or **in that** the guide means (20) has a drive element (25), by means of which a relative movement of the rail element (22) with respect to the rotation element (21) can be initiated.

9. Fastening system (1) according to one of claims 4 through 8,
**characterized in that**
the guide means (20) has an electrical connector (24), by means of which an electrical connection can be realized through the fastening opening (30) - in particular, wherein the guide means (20) has a switching element (28), by means of which, when the flap (2) is moved, an electrical signal can be generated and/or the electrical connection can be closed and/or interrupted.

10. Method for manufacturing a housing according to one of claims 1 through 3 for a storage compartment (3) of a vehicle (4), wherein the housing (10) has a wall (11) with a fastening opening (30) for arranging a guide means (20) of a fastening system (1), according to one of claims 4 through 9, comprising the following steps:
- providing a forming tool (100) having at least a first and a second form element (101, 102), that at least partially form a cavity (103), which at least partially forms a negative shape of the housing (10), wherein the first and second form elements (101, 102) seal a contact area (105), in which the fastening opening (30) can be formed at least in regions,
- filling the cavity (103) with a material of the housing (10),
- demolding the first and second form elements (101, 102).

## Revendications

1. Boîtier (10) pour un compartiment de rangement (3) d'un véhicule (4), présentant
une paroi (11) comprenant une première zone de surface (12), laquelle forme au moins partiellement une première face (14) de la paroi (11), et une ouverture de fixation (30), qui est adjacente à la première zone de surface (12),
un moyen de guidage (20) pour le guidage d'un mouvement d'ouverture et/ou de fermeture d'un clapet (2) du compartiment de rangement (3) pouvant être disposé dans l'ouverture de fixation (30),
**caractérisé en ce**
**que** l'ouverture de fixation (30) présente une surface enveloppante (13), laquelle fait saillie partiellement au-dessus de la première zone de surface (12), une autre zone de surface (17) formant une autre partie de la première face (14), la première et l'autre zone de surface (12, 17) étant séparées par une marche ou se fondant l'une dans l'autre en continu par une pente.

2. Boîtier (10) selon la revendication 1,
**caractérisé en ce**
**que** une deuxième zone de surface (13) d'une deuxième face (15) de la paroi (11) est adjacente à l'ouverture de fixation (30), la deuxième zone de surface (13) se trouvant essentiellement dans un plan avec la première zone de surface (12) ou étant surélevée par rapport à la première zone de surface (12) dans la direction de la première face (14).

3. Boîtier (10) selon l'une quelconque des revendications 1 ou 2, **caractérisé en ce**
**que** la surface enveloppante (31) est réalisée au moins partiellement en forme de cylindre pour le guidage en rotation du moyen de guidage (20), en particulier l'ouverture de fixation (30) présentant un découpage de montage (32), à travers lequel au moins une première saillie (21.1) d'un élément de rotation (21) du moyen de guidage (20) peut être insérée.

4. Système de fixation (1) pour la fixation au moins partielle d'un clapet (2) d'un compartiment de rangement (3) d'un véhicule (4), présentant
un moyen de guidage (20) pour le guidage d'un mouvement d'ouverture et/ou de fermeture du clapet (2)
et un boîtier (10) comprenant une paroi (11), laquelle présente une ouverture de fixation (30), le moyen de guidage (20) étant disposé dans l'ouverture de guidage (30),
**caractérisé en ce**
**que** le boîtier (10) est réalisé selon l'une quelconque des revendications précédentes.

5. Système de fixation (1) selon la revendication 4,
**caractérisé en ce**
**que** le moyen de guidage (20) comprenant un élément de rotation (21), lequel fait saillie à travers l'ouverture de fixation (30), un élément de rail (22) étant en particulier passé dans l'élément de rotation (21), au moyen duquel le clapet (2) peut être couplé en translation et/ou en rotation.

6. Système de fixation (1) selon la revendication 5,
**caractérisé en ce**
**que** l'élément de rotation (21) présente une première et une deuxième saillie (21.1, 21.2), la première et la deuxième saillie (21.1, 21.2) pouvant être insérées à travers un découpage de montage (32) de l'ouverture de fixation (30) pour le montage de l'élément de rotation (21) à la paroi (11), en particulier de telle façon que la première et la deuxième saillie (21.1, 21.2) reposent, à l'état de montage, contre la première face (14) de la paroi (11).

7. Système de fixation (1) selon l'une quelconque des revendications 5 à 6,
**caractérisé en ce**
**que** l'élément de rotation (21) présente une troisième et une quatrième saillie (21.3, 21.4), la troisième et la quatrième saillie (21.3, 21.4) reposant contre une deuxième face (15) de la paroi (11).

8. Système de fixation (1) selon l'une quelconque des revendications 4 à 7,
**caractérisé en ce**
**que** le moyen de guidage (20) présente un élément d'amortissement (23), au moyen duquel un mouvement relatif de l'élément de rail (22) par rapport à l'élément de rotation (21) peut être amorti **et/ou que** le moyen de guidage (20) présente un élément d'entraînement (25), au moyen duquel un mouvement relatif de l'élément de rail (22) par rapport à l'élément de rotation (21) peut être initialisé.

9. Système de fixation (1) selon l'une quelconque des revendications 4 à 8,
**caractérisé en ce**
**que** le moyen de guidage (20) présente un raccord électrique (24), au moyen duquel une connexion électrique peut être réalisée à travers l'ouverture de fixation (30), l'élément de guidage (20) présentant en particulier un élément de commutation (28), au moyen duquel un signal électrique peut être généré et/ou la connexion électrique peut être fermée et/ou interrompue, lors d'un mouvement du clapet (2).

10. Procédé pour fabriquer un boîtier selon l'une quelconque des revendications 1 à 3 pour un compartiment de rangement (3) d'un véhicule (4), le boîtier (10) présentant une paroi (11) comprenant une ouverture de fixation (30) pour l'agencement d'un moyen de guidage (20) d'un système de fixation (1) selon l'une quelconque des revendications 4 à 9, comprenant les étapes suivantes :
- fourniture d'un outil de formage (100) comprenant au moins un premier et un deuxième élément de formage (101, 102), lesquels forment au moins partiellement une cavité (103), laquelle forme au moins partiellement une forme négative du boîtier (10), le premier et le deuxième élément de formage (101, 102) étanchéifiant une zone de contact (105), dans laquelle l'ouverture de fixation (30) peut être formée au moins en partie,
- remplissage de la cavité (103) avec un matériau du boîtier (10),
- démoulage du premier et du deuxième élément de formage (101, 102).
